# EUROPEAN PATENT APPLICATION

(11) **EP 4 790 248 A1**
(43) Date of publication of application: **12.08.2026**
(21) Application number: 26156959.4
(22) Date of filing: 06.02.2026
(51) Int. Cl.: F02C 6/08, F02C 7/18

(54) **AIR SYSTEM FOR AIRCRAFT PROPULSION SYSTEM ELECTRIC MACHINE**

(30) Priority: 07.02.2025 US 202519048442
(71) Applicant: RTX Corporation, Farmington, CT 06032 (US)
(72) Inventor: YAZICI, Murat, Glastonbury, 06033 (US); CLARK, Thomas E., Wells, 04090 (US)
(74) Representative: Dehns

(57) **Abstract**

An assembly is provided for an aircraft propulsion system (22). This assembly includes a compressor section (45; 45A; 45B), a combustor section (46), a turbine section (47), a flowpath (52), a tail cone structure (88), an electric machine (108) and an air system. The flowpath (52) includes a flowpath inlet (56) and a flowpath exhaust (58). The flowpath (52) extends through the compressor section (45; 45A; 45B), the combustor section (46) and the turbine section (47) from the flowpath inlet (56) to the flowpath exhaust (58). The tail cone structure (88) forms an inner peripheral boundary of the flowpath (52) at the flowpath exhaust (58). The tail cone structure (88) includes an internal volume (142). The electric machine (108) is disposed within the internal volume (142). The air system is configured to direct air, bled from the flowpath (52) upstream of the compressor section (45; 45A; 45B), into the tail cone structure (88) to cool the electric machine (108).

## Description

### BACKGROUND OF THE DISCLOSURE

### 1. Technical Field

This disclosure relates generally to an aircraft and, more particularly, to an air system for the aircraft.

### 2. Background Information

An aircraft and its propulsion system(s) may include various onboard air systems. Various types and configurations of air systems are known in the art, including air cooling systems. While these air systems have various benefits, there is still room in the art for improvement.

### SUMMARY OF THE DISCLOSURE

According to an aspect of the present disclosure, an assembly is provided for an aircraft propulsion system. This assembly includes a compressor section, a combustor section, a turbine section, a flowpath, a tail cone structure, an electric machine and an air system. The flowpath includes a flowpath inlet and a flowpath exhaust. The flowpath extends through the compressor section, the combustor section and the turbine section from the flowpath inlet to the flowpath exhaust. The tail cone structure forms an inner peripheral boundary of the flowpath at the flowpath exhaust. The tail cone structure includes an internal volume. The electric machine is disposed within the internal volume. The air system is configured to direct air, bled from the flowpath upstream of the compressor section, into the tail cone structure to cool the electric machine.

According to another aspect of the present disclosure, another assembly is provided for an aircraft propulsion system. This assembly includes a compressor section, a combustor section, a turbine section, a flowpath, a tail cone structure, an electric machine and an air system. The flowpath includes a flowpath inlet and a flowpath exhaust. The flowpath extends through the compressor section, the combustor section and the turbine section from the flowpath inlet to the flowpath exhaust. The tail cone structure forms an inner peripheral boundary of the flowpath at the flowpath exhaust. The tail cone structure includes an internal volume. The electric machine is disposed within the internal volume. The air system is configured to direct air into the tail cone structure to cool the electric machine. The air system is configured to bleed the air from the flowpath along the compressor section during a first mode of operation. The air system is configured to receive the air from an air source outboard of the flowpath during a second mode of operation.

According to still another aspect of the present disclosure, another assembly is provided for an aircraft propulsion system. This assembly includes an open propulsor rotor, an engine core, a flowpath, a tail cone structure, an electric machine and an air system. The engine core is configured to power rotation of the open propulsor rotor. The engine core includes a compressor section, a combustor section and a turbine section. The flowpath extends through the compressor section, the combustor section and the turbine section from a flowpath inlet to a flowpath exhaust. The tail cone structure forms an inner peripheral boundary of the flowpath at the flowpath exhaust. The tail cone structure includes an internal volume. The electric machine is disposed within the internal volume. The air system is configured to direct air, bled from the flowpath upstream of a combustor in the combustor section, into the tail cone structure to cool the electric machine.

The electric machine may be configurable as an electric motor during a motor mode of operation.

The electric machine may be configurable as an electric generator during a generator mode of operation.

The compressor section may be a high pressure compressor section. The assembly may also include a low pressure compressor section fluidly coupled inline along the flowpath between the flowpath inlet and the high pressure compressor section. The air system may be configured to bleed the air from the flowpath along the low pressure compressor section.

The compressor section may be a high pressure compressor section. The assembly may also include a low pressure compressor section fluidly coupled inline along the flowpath between the flowpath inlet and the high pressure compressor section. The air system may be configured to bleed the air from the flowpath at a location between the low pressure compressor section and the high pressure compressor section.

The assembly may also include a rotating structure, and the rotating structure may include a bladed rotor arranged along the flowpath. The electric machine may include an electric machine rotor operatively coupled to the rotating structure.

The bladed rotor may be disposed in the turbine section.

The compressor section may be a high pressure compressor section. The assembly may also include a low pressure compressor section fluidly coupled inline along the flowpath between the flowpath inlet and the high pressure compressor section. The bladed rotor may be disposed in the low pressure compressor section.

The air system may be configured to direct the air into the internal volume to impinge against the electric machine.

The air system may be configured to direct the air into the internal volume to flow around and convectively cool the electric machine.

The assembly may also include a vane structure, and the vane structure may include an inner platform, an outer platform and a plurality of vanes. The inner platform may form an inner peripheral boundary of the flowpath through the vane structure. The outer platform may form an outer peripheral boundary of the flowpath through the vane structure. The vanes may be arranged circumferentially about an axis in an array. Each of the vanes may extend radially across the flowpath from the inner platform to the outer platform. The vanes may include a first vane. The air system may be configured to direct the air radially inward across the flowpath through the first vane.

The air system may include a control valve to regulate a flow of the air bled from the flowpath.

The air system may include a control valve to regulate a flow of the air direct into the tail cone structure.

The air system may be configured to direct: the air, bled from the flowpath upstream of the compressor section, into the tail cone structure to cool the electric machine during a first mode of operation; and air received from an air source into the tail cone structure to cool the electric machine during a second mode of operation, and the air source is disposed radially outboard of the flowpath.

The air source may include a bypass flowpath within the aircraft propulsion system.

The air source may be external to the aircraft propulsion system.

The assembly may include a ducted propulsor rotor and a rotating structure. The rotating structure may be operatively coupled to and configured to drive rotation of the ducted propulsor rotor. The rotating structure may include a turbine rotor disposed in the turbine section.

The assembly may also include an open propulsor rotor and a rotating structure. The rotating structure may be operatively coupled to and configured to drive rotation of the open propulsor rotor. The rotating structure may include a turbine rotor disposed in the turbine section.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system with a ducted propulsor rotor.
FIG. 2 is a schematic illustration of a portion of the aircraft propulsion system with an electric machine system.
FIG. 3 is a schematic illustration of a portion of the aircraft propulsion system with an air system.
FIG. 4 is a schematic illustration of a portion of the aircraft propulsion system at a tail cone structure.
FIG. 5 is a schematic end view illustration of a portion of the aircraft propulsion system with a stator vane structure.
FIG. 6 is a partial schematic illustration of the aircraft propulsion system with an open propulsor rotor.

### DETAILED DESCRIPTION

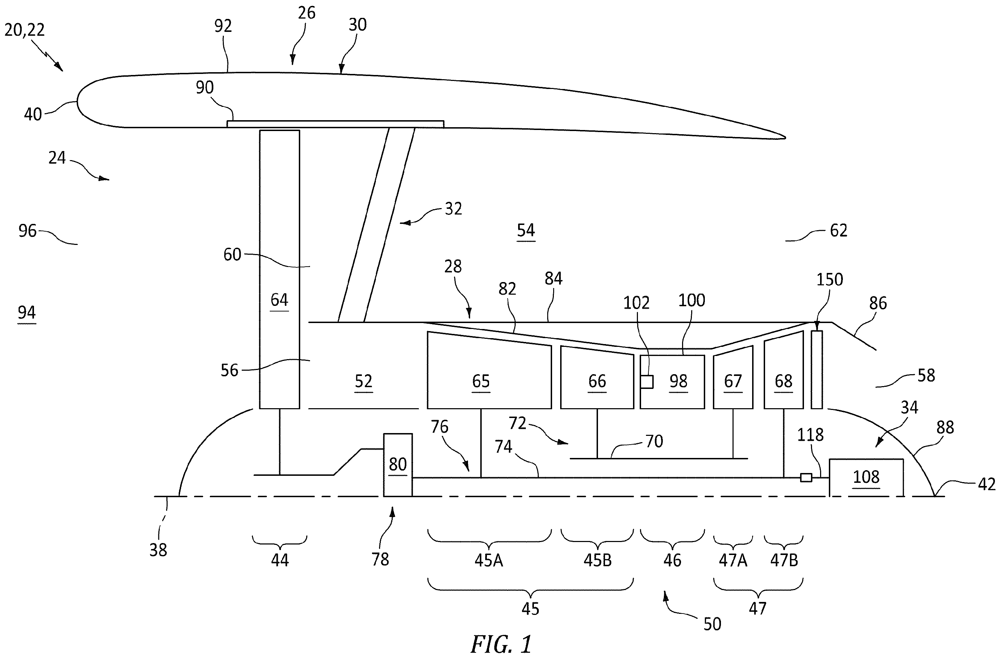

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open rotor propulsion system. Moreover, the aircraft powerplant 20 is not limited to propulsion system applications. The aircraft powerplant 20, for example, may also (or alternatively) be configured as an electrical power system for the aircraft; e.g., an auxiliary power unit (APU).

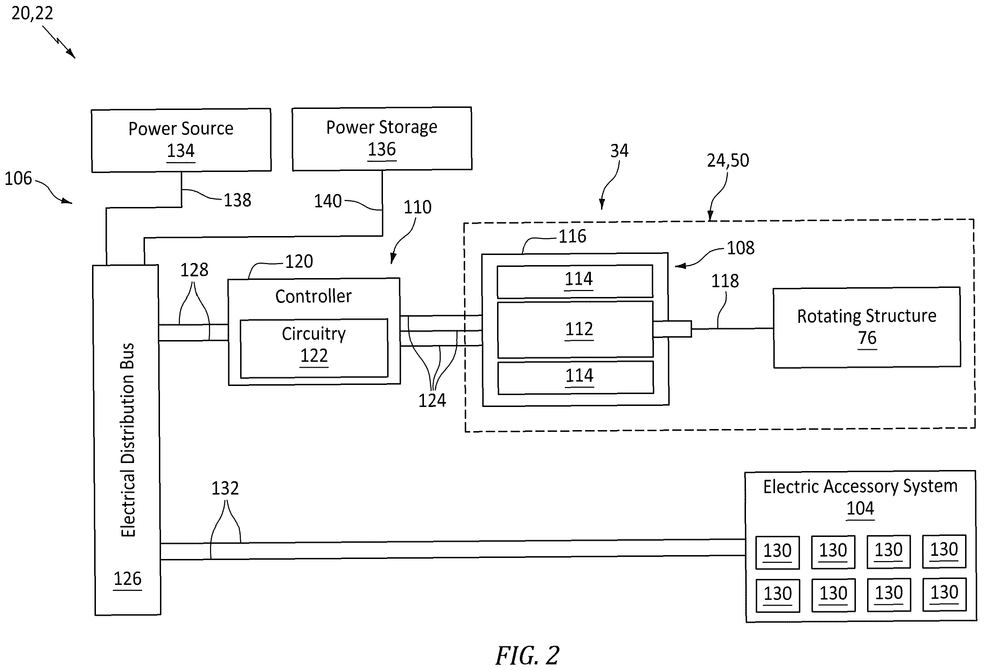

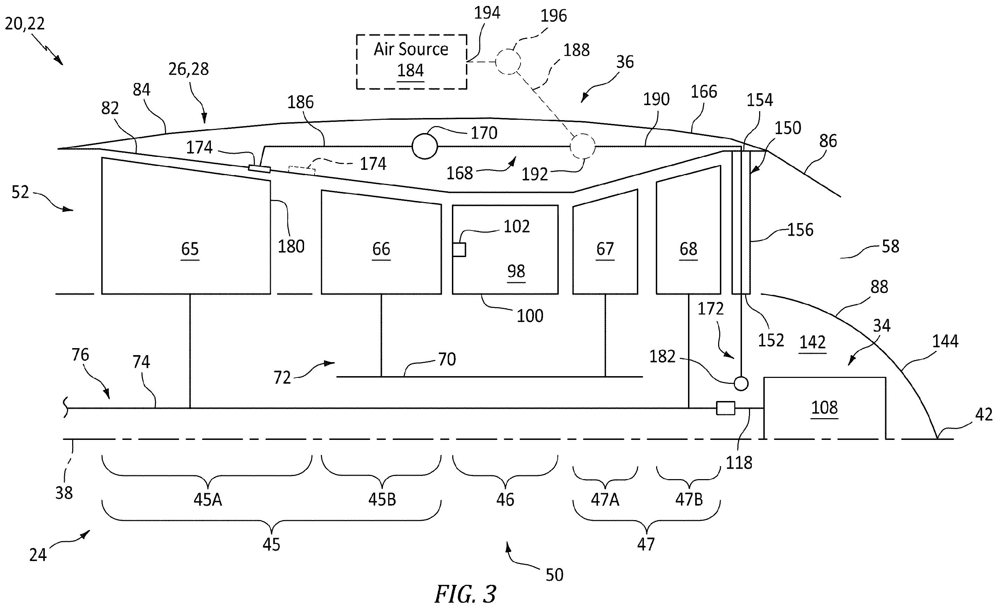

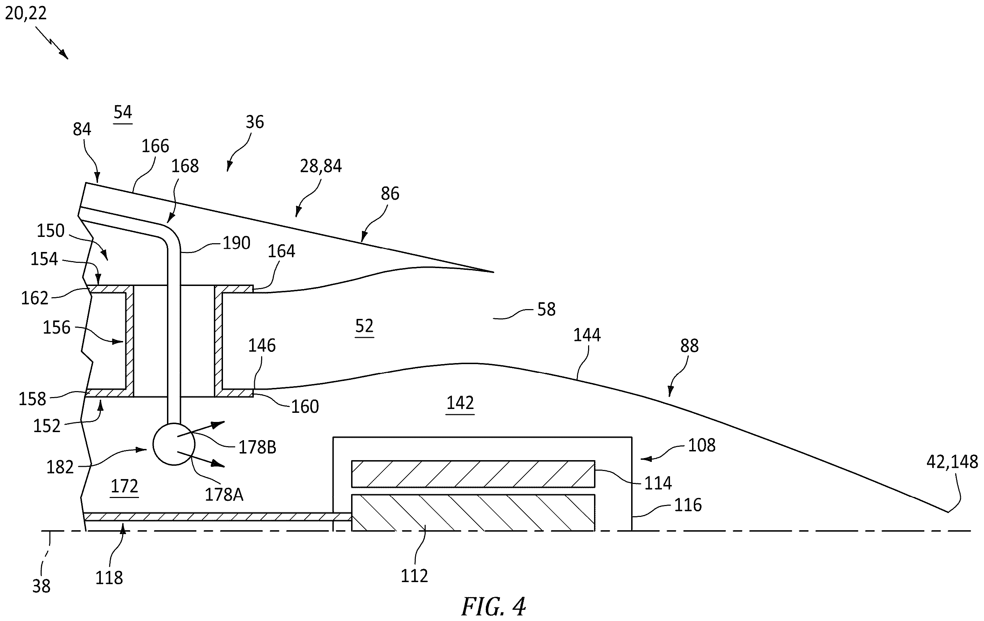

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes an electric machine system 34 (see FIG. 2) and an air system 36 (see FIGS. 3 and 4). The aircraft propulsion system 22 extends axially along an axis 38 between an axial upstream, forward end 40 of the aircraft propulsion system 22 and an axial downstream, aft end 42 of the aircraft propulsion system 22. Briefly, the propulsion system axis 38 may be a centerline axis of the aircraft propulsion system 22, the turbine engine 24 and/or one or more of its members. The propulsion system axis 38 may also or alternatively be a rotational axis for one or more members of the turbine engine 24.

The aircraft propulsion system 22 and its turbine engine 24 of FIG. 1 include a propulsor section 44 (e.g., a fan section), a compressor section 45, a combustor section 46 and a turbine section 47. The compressor section 45 of FIG. 1 includes a low pressure compressor (LPC) section 45A and a high pressure compressor (HPC) section 45B. The turbine section 47 of FIG. 1 includes a high pressure turbine (HPT) section 47A and a low pressure turbine (LPT) section 47B. At least (or only) the LPC section 45A, the HPC section 45B, the combustor section 46, the HPT section 47A and the LPT section 47B collectively form a core 50 (e.g., a gas generator) of the turbine engine 24. The aircraft propulsion system 22 and its turbine engine 24 of FIG. 1 also include a core flowpath 52 (e.g., an annular core flowpath) and a bypass flowpath 54 (e.g., an annular bypass flowpath). The core flowpath 52 extends sequentially through the LPC section 45A, the HPC section 45B, the combustor section 46, the HPT section 47A and the LPT section 47B from an airflow inlet 56 into the core flowpath 52 to a combustion products exhaust 58 out from the core flowpath 52. The bypass flowpath 54 extends through a bypass duct from an airflow inlet 60 into the bypass flowpath 54 to an airflow exhaust 62 from the bypass flowpath 54, where the bypass duct may be formed by the inner housing structure 28 and the outer housing structure 30. The bypass flowpath 54 and its bypass duct are configured to bypass (e.g., are disposed radially outboard of and extend along) the engine core 50 and the inner housing structure 28.

The propulsor section 44, the LPC section 45A, the HPC section 45B, the combustor section 46, the HPT section 47A and the LPT section 47B may be arranged sequentially along the propulsion system axis 38 within the propulsion system housing 26. The propulsor section 44 includes a bladed propulsor rotor 64; e.g., a fan rotor. The LPC section 45A includes a bladed low pressure compressor (LPC) rotor 65. The HPC section 45B includes a bladed high pressure compressor (HPC) rotor 66. The HPT section 47A includes a bladed high pressure turbine (HPT) rotor 67. The LPT section 47B includes a bladed low pressure turbine (LPT) rotor 68. Each of these engine rotors 64-68 includes a rotor base (e.g., a disk or a hub) and a plurality of rotor blades (e.g., airfoils, vanes, etc.). The rotor blades may be arranged into one or more stages axially along the respective engine rotor 64-68. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade.

The HPC rotor 66 is coupled to and rotatable with the HPT rotor 67. The HPC rotor 66 of FIG. 1, for example, is connected to the HPT rotor 67 through a high speed shaft 70. At least (or only) the HPC rotor 66, the HPT rotor 67 and the high speed shaft 70 collectively form a high speed rotating structure 72; e.g., a high speed spool of the turbine engine 24 and its engine core 50. This high speed rotating structure 72 of FIG. 1 and its members 66, 67 and 70 are rotatable about the propulsion system axis 38. However, it is contemplated the high speed rotating structure 72 may alternatively be rotatable about another axis radially and/or angularly offset from the rotational axis of the propulsor rotor 64 and/or the centerline axis of the turbine engine 24.

The LPC rotor 65 is coupled to and rotatable with the LPT rotor 68. The LPC rotor 65 of FIG. 1, for example, is connected to the LPT rotor 68 through a low speed shaft 74. At least (or only) the LPC rotor 65, the LPT rotor 68 and the low speed shaft 74 collectively form a low speed rotating structure 76; e.g., a low speed spool of the turbine engine 24 and its engine core 50. This low speed rotating structure 76 of FIG. 1 and its members 65, 68 and 74 are rotatable about the propulsion system axis 38. However, it is contemplated the low speed rotating structure 76 may alternatively be rotatable about another axis radially and/or angularly offset from the rotational axis of the propulsor rotor 64 and/or the centerline axis of the turbine engine 24.

The low speed rotating structure 76 is coupled to the propulsor rotor 64 through a drivetrain 78. The drivetrain 78 may be configured as a geared drivetrain, where a geartrain 80 (e.g., a transmission, a speed change device, an epicyclic geartrain, etc.) is disposed between and operatively couples the propulsor rotor 64 to the low speed rotating structure 76 and its LPT rotor 68. With this arrangement, the propulsor rotor 64 may rotate at a different (e.g., slower) rotational speed than the low speed rotating structure 76 and its LPT rotor 68. Here, the propulsor rotor 64 and the low speed rotating structure 76 may rotate in a common (the same) direction about the propulsion system axis 38 or in opposite directions about the propulsion system axis 38 depending, for example, upon the specific configuration of the geartrain 80. Alternatively, the drivetrain 78 may be configured as a direct-drive drivetrain, where the geartrain 80 is omitted. With such an arrangement, the propulsor rotor 64 rotates at a common (the same) rotational speed as the low speed rotating structure 76 and its LPT rotor 68.

The inner housing structure 28 of FIG. 1 includes an inner case 82 (e.g., a core case) for the turbine engine 24 and an inner nacelle structure 84 (sometimes referred to as an inner fixed structure (IFS)). The inner case 82 is disposed radially outboard of, extends axially along and may circumscribe one or more or all of the engine sections 45A-47B and the engine rotors 65-68. The inner case 82 may thereby house and provide a support structure for the respective engine sections 45A-47B and the engine rotors 65-68. The inner nacelle structure 84 is configured to provide an aerodynamic cover over the engine core 50 and its inner case 82. At least (or only) the inner housing structure 28 and its inner nacelle structure 84 may collectively form a radial inner peripheral boundary of the bypass flowpath 54. A downstream / aft portion of the inner housing structure 28 such as, for example, a (e.g., tubular) core exhaust nozzle 86 of the inner nacelle structure 84 also covers at least a portion of a tail cone structure 88; e.g., an (e.g., conical) exhaust center body. More particularly, the inner nacelle structure 84 and its exhaust nozzle 86 axially overlap and extend circumferentially about (e.g., completely around) the tail cone structure 88. The exhaust nozzle 86 and the tail cone structure 88 of FIG. 1 (see also FIG. 3) collectively form a downstream / aft portion of the core flowpath 52 and its core exhaust 58.

The outer housing structure 30 of FIG. 1 includes an outer case 90 (e.g., a fan case) for the turbine engine 24 and an outer nacelle structure 92. The outer case 90 is disposed radially outboard of, extends axially along and may circumscribe the propulsor section 44 and its propulsor rotor 64. The outer case 90 may thereby house and may be configured as a containment structure for the propulsor section 44 and its propulsor rotor 64. The outer nacelle structure 92 is configured to provide an aerodynamic cover over the outer case 90. At least (or only) the outer housing structure 30 and its outer nacelle structure 92 may collectively form a radial outer peripheral boundary of the bypass flowpath 54.

During operation of the aircraft propulsion system 22 of FIG. 1, ambient air from an environment 94 external to the aircraft and its aircraft propulsion system 22 enters the aircraft propulsion system 22 and its turbine engine 24 through an airflow inlet 96. This air is propelled by the rotating propulsor rotor 64 in a downstream, aft direction towards the propulsion system aft end 42.

An outer stream of the air propelled by the rotating propulsor rotor 64 is directed into the bypass flowpath 54 through its bypass inlet 60, which air entering the bypass flowpath 54 may be referred to as "bypass air". The guide vane structure 32 conditions (e.g., straightens out, de-swirls, etc.) the flow of the bypass air within the bypass duct. This conditioned bypass air is subsequently directed out of the aircraft propulsion system 22 through the bypass exhaust 62 to provide forward thrust. The propulsion of the bypass air may account for a majority of the forward thrust generated by the aircraft propulsion system 22 and its turbine engine 24 of FIG. 1.

An inner stream of the air propelled by the rotating propulsor rotor 64 is directed into the core flowpath 52 through its core inlet 56, which air entering the core flowpath 52 may be referred to as "core air". This core air is compressed by the LPC rotor 65 and the HPC rotor 66 and is directed into a combustion chamber 98 (e.g., annular combustion chamber) of a combustor 100 (e.g., annular combustor) in the combustor section 46. Fuel is injected into the combustion chamber 98 by one or more fuel injectors 102 and mixed with the compressed core air to provide a fuel-air mixture. This fuel-air mixture is ignited and combustion products thereof flow through and sequentially drive rotation of the HPT rotor 67 and the LPT rotor 68. The rotation of the HPT rotor 67 and the LPT rotor 68 respectively drive rotation of the HPC rotor 66 and the LPC rotor 65 and, thus, compression of the air received from the core inlet 56. The rotation of the LPT rotor 68 also drives rotation of the propulsor rotor 64 through the drivetrain 78.

Referring to FIG. 2, the electric machine system 34 is electrically coupled to an optional electric accessory system 104 and an electrical system 106 for the aircraft and its aircraft propulsion system 22. The electric machine system 34 of FIG. 2 includes at least (or only) one electric machine 108 and an electric machine (EM) controller 110 for the electric machine 108. For ease of description, the electric machine 108 of FIG. 2 is described below as being electrically coupled to, controlled by and/or otherwise associated with a single, dedicated EM controller 110. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with the single electric machine.

The electric machine 108 of FIG. 2 includes an electric machine rotor 112, an electric machine stator 114 and an electric machine housing 116; e.g., a case. The machine rotor 112 is rotatable about a rotational axis of the machine rotor 112, which rotational axis may also be an axial centerline of the electric machine 108. The machine stator 114 of FIG. 2 is radially outboard of and circumscribes the machine rotor 112. With this arrangement, each electric machine 108 is configured as a radial flux electric machine. The electric machine 108 of the present disclosure, however, is not limited to such an exemplary rotor-stator configuration nor to radial flux arrangements. The machine rotor 112, for example, may alternatively be radially outboard of and circumscribe the machine stator 114. In another example, the machine rotor 112 may be axially next to the machine stator 114 configuring the electric machine 108 as an axial flux electric machine. Referring again to FIG. 2, the machine rotor 112 and the machine stator 114 are at least partially or completely housed within an interior of the machine housing 116.

The electric machine 108 may be operatively coupled to a respective one of the engine rotating structures 72, 76 (see FIG. 1). The machine rotor 112 of FIG. 2, for example, is mechanically coupled to and rotatable with the low speed rotating structure 76 at least or only through a drivetrain 118. This drivetrain 118 may be configured as or otherwise include a shaft, a gearbox, and/or the like.

The electric machine 108 of FIG. 2 may be configurable as an electric motor and/or an electric generator; e.g., an electric motor-generator. For example, during a motor mode of operation, the electric machine 108 may operate as the electric motor to convert electricity received from the aircraft electrical system 106 into mechanical power. The machine stator 114, for example, may generate an electromagnetic field with the machine rotor 112 using a current of electricity received from the aircraft electrical system 106 through the EM controller 110. This electromagnetic field may drive rotation of the machine rotor 112. The machine rotor 112, in turn, may provide mechanical power to and drive rotation of the low speed rotating structure 76 through the respective drivetrain 118. This mechanical power may be provided to boost power or completely power the rotation of the low speed rotating structure 76. By contrast, during a generator mode of operation, the electric machine 108 may operate as the electric generator to convert mechanical power received from the low speed rotating structure 76 into electricity. Rotation of the machine rotor 112, for example, may be rotationally driven by rotation of the low speed rotating structure 76 through the drivetrain 118. The rotation of the machine rotor 112 may generate an electromagnetic field with the machine stator 114, and the machine stator 114 may convert energy from the electromagnetic field into electricity. The electric machine 108 may then provide a current of electricity to the aircraft electrical system 106 through the EM controller 110 for storage and/or further use. The electric machine 108 of the present disclosure, however, is not limited to such exemplary operation. For example, the electric machine 108 may alternatively be configured as a dedicated electric generator; e.g., without the electric motor functionality. In another example, the electric machine 108 may alternatively be configured as a dedicated electric motor; e.g., without the electric generator functionality.

The EM controller 110 includes a controller housing 120 and internal controller circuitry 122. The controller housing 120 may be configured as an enclosed case (e.g., a closed or sealed container) for the respective controller circuitry 122. The controller circuitry 122 is disposed within an interior of the controller housing 120; e.g., an internal chamber or other volume(s) within and enclosed by the controller housing 120. The controller circuitry 122 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

The EM controller 110 is electrically coupled to the electric machine 108 through one or more electric cables 124; e.g., high voltage electric cables, power feeder cables, etc. More particularly, the controller circuitry 122 of the EM controller 110 is electrically coupled to the electric machine 108 and its machine stator 114 through the electric cables 124. Similarly, the EM controller 110 is electrically coupled to an electrical distribution bus 126 of the aircraft electrical system 106 through one or more electric cables 128; e.g., high voltage electric cables, power feeder cables, etc. More particularly, the controller circuitry 122 of the EM controller 110 is electrically coupled to the aircraft electrical system 106 and its electrical distribution bus 126 through the respective electric cables 128.

The EM controller 110 and its controller circuitry 122 are configured to control operation of the electric machine 108. For example, when operating as the electric motor, the EM controller 110 and its controller circuitry 122 are configured to regulate a flow of electricity from the aircraft electrical system 106 to the electric machine 108. This electricity flow regulation may include: (a) turning-on the flow of electricity from the aircraft electrical system 106 to the electric machine 108 (e.g., electrically coupling the electric machine 108 to the aircraft electrical system 106); (b) turning-off the flow of electricity from the aircraft electrical system 106 to the electric machine 108 (e.g., electrically decoupling the electric machine 108 from the aircraft electrical system 106); (c) moderating the flow of electricity from the aircraft electrical system 106 to the electric machine 108. Here, the EM controller 110 operates as a motor controller. In another example, when operating as the electric generator, the EM controller 110 and its controller circuitry 122 are configured to regulate a flow of electricity from the electric machine 108 to the aircraft electrical system 106. This electricity flow regulation may include: (a) turning-on the flow of electricity from the electric machine 108 to the aircraft electrical system 106 (e.g., electrically coupling the electric machine 108 to the aircraft electrical system 106); (b) turning-off the flow of electricity from the electric machine 108 to the aircraft electrical system 106 (e.g., electrically decoupling the electric machine 108 from the aircraft electrical system 106); (c) moderating the flow of electricity from the electric machine 108 to the aircraft electrical system 106. Here, the EM controller 110 operates as a generator controller.

The electric accessory system 104 includes one or more electric devices 130. The electric devices 130 may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 130 of FIG. 2 may be configured as part of one or more sub-systems for the aircraft propulsion system 22 and its turbine engine 24. Examples of these sub-systems include, but are not limited to: a fuel system for delivering the fuel to the fuel injectors 102 (see FIG. 1); a lubrication system for delivering lubricant (e.g., oil) to one or more lubricated components (e.g., bearing(s), gear system(s), seal system(s), etc.) of the aircraft propulsion system 22 and its turbine engine 24; a cooling system for delivering coolant (e.g., liquid coolant, air, etc.) to one or more fluid cooled components of the aircraft propulsion system 22 and its turbine engine 24; and an actuation system for moving one or more adjustable components (e.g., variable guide vanes, a variable area nozzle, etc.) of the aircraft propulsion system 22 and its turbine engine 24. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present disclosure, however, is not limited to the foregoing exemplary electric devices or sub-systems which may include those electric devices.

Each electric device 130 is electrically coupled to the electrical distribution bus 126 of the aircraft electrical system 106 through one or more electric cables 132 (collectively schematically shown); e.g., high voltage electric cables, low voltage electric cables, power feeder cables, etc. Each electric device 130 may thereby receive a current of electricity from the aircraft electrical system 106 to power operation thereof.

The aircraft electrical system 106 includes the electrical distribution bus 126. This aircraft electrical system 106 may also include a power source 134 and/or a power storage 136. The electrical distribution bus 126 is electrically coupled to the electric machine 108 through its EM controller 110. The electrical distribution bus 126 is electrically coupled to each of the electric devices 130. The electrical distribution bus 126 is also electrically coupled to the power source 134 and the power storage 136, respectively schematically shown via lines 138 and 140. With this arrangement, the electrical distribution bus 126 provides an intermediate connection between the various electrical aircraft propulsion system members 108 (via 110), 130, 134 and/or 136. The power source 134 may be an electric generator powered by the turbine engine 24 or an electric generator powered by another aircraft powerplant; e.g., an engine of a companion aircraft propulsion system, an engine of an auxiliary power unit (APU), a fuel cell system, etc. The power storage 136 is configured to receive electricity from the electrical distribution bus 126 for storage. The power storage 136 is also configured to provide the stored electricity to the electrical distribution bus 126. The power storage 136, for example, may be configured as or otherwise include one or more electricity storage devices; e.g., batteries, super capacitors, etc. With the foregoing aircraft electrical system 106 arrangement, the electrical current provided to one, some or all of the electric devices 130 may be received, through the electrical distribution bus 126, from any one, some or all of the electrical aircraft propulsion system members 108, 134 and/or 136.

Referring to FIG. 4, the electric machine 108 is disposed at least partially or completely within an internal volume 142 (e.g., a cavity, a chamber, etc.) of the tail cone structure 88. A radial outer periphery of this tail cone volume 142 may be at least partially or completely formed by a sidewall 144 of the tail cone structure 88. The tail cone sidewall 144 of FIG. 4, for example, is spaced radially outboard from the electric machine 108. The tail cone sidewall 144 extends axially along the propulsion system axis 38 from an upstream, forward end 146 of the tail cone structure 88 to a downstream, aft end 148 of the tail cone structure 88; e.g., a trailing end / tip of the tail cone structure 88. The tail cone sidewall 144 extends circumferentially around the propulsion system axis 38, providing the tail cone structure 88 and its tail cone sidewall 144 with a full-hoop (e.g., generally conical) body. The tail cone structure 88 and its tail cone sidewall 144 of FIG. 4 thereby axially overlap and circumscribe the electric machine 108 disposed within its tail cone volume 142.

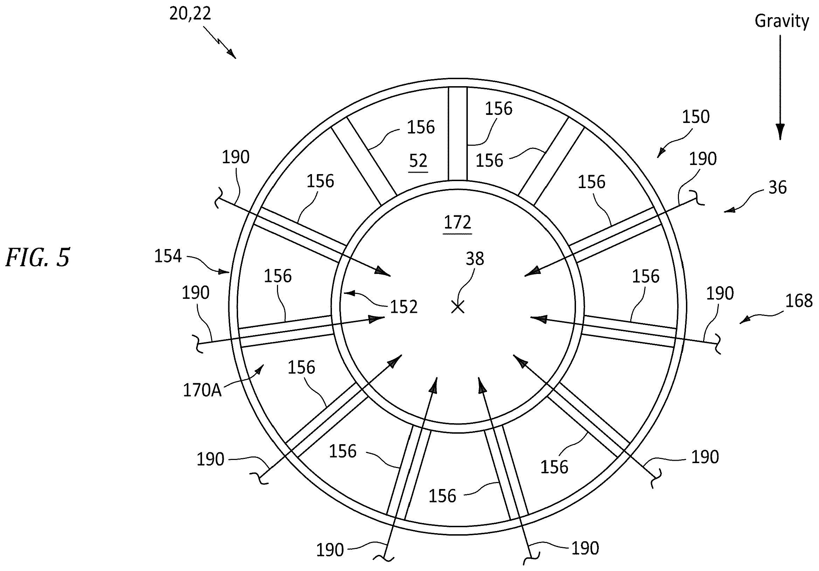

The tail cone structure 88 of FIG. 4 is disposed axially next to (along the propulsion system axis 38) and downstream of (along the core flowpath 52) a stator vane structure 150 of the turbine engine 24. The tail cone structure 88 may also be mounted to the stator vane structure 150. This stator vane structure 150 may be configured as or otherwise include a turbine exhaust case (TEC) for the turbine engine 24 and its turbine section 47 (see FIG. 3). The stator vane structure 150 of FIG. 4, for example, includes a radial inner platform 152, a radial outer platform 154 and a plurality of stator vanes 156 (see also FIG. 5); e.g., aerodynamic struts, nozzle vanes, exit guide vanes, etc.

The vane structure inner platform 152 extends axially along the propulsion system axis 38 from an upstream, forward end 158 of the vane structure inner platform 152 to a downstream, aft end 160 of the vane structure inner platform 152. The vane structure inner platform 152 extends circumferentially around the propulsion system axis 38, providing the vane structure inner platform 152 with a full-hoop (e.g., tubular) body (see also FIG. 5). The vane structure inner platform 152 thereby forms a radial inner peripheral boundary of a section of the core flowpath 52 which extends longitudinally through the stator vane structure 150. This inner peripheral boundary of the core flowpath 52 may be adjacent to and substantially or completely flush with a radial inner peripheral boundary of a downstream section of the core flowpath 52 which extends longitudinally along the tail cone structure 88 to the core exhaust 58.

The vane structure outer platform 154 is spaced radially outboard from the vane structure inner platform 152. The vane structure outer platform 154 extends axially along the propulsion system axis 38 from an upstream, forward end 162 of the vane structure outer platform 154 to a downstream, aft end 164 of the vane structure outer platform 154. The vane structure outer platform 154 extends circumferentially around the propulsion system axis 38, providing the vane structure outer platform 154 with a full-hoop (e.g., tubular) body (see also FIG. 5). The vane structure outer platform 154 thereby forms a radial outer peripheral boundary of the section of the core flowpath 52 which extends longitudinally through the stator vane structure 150. This outer peripheral boundary of the core flowpath 52 may be adjacent to and substantially or completely flush with a radial outer peripheral boundary of the downstream section of the core flowpath 52 which extends longitudinally along the exhaust nozzle 86 to the core exhaust 58.

Referring to FIG. 5, the stator vanes 156 are arranged and may (or may not) be equispaced circumferentially about the propulsion system axis 38 in an annular array; e.g., a circular array. Each stator vane 156 is connected to the vane structure inner platform 152 and the vane structure outer platform 154. Each stator vane 156, for example, may be formed integral with or attached (e.g., mechanically fastened, bonded, etc.) to the vane structure inner platform 152 and the vane structure outer platform 154. Each stator vane 156 projects spanwise out from the vane structure inner platform 152, radially across the core flowpath 52, to the vane structure outer platform 154.

Referring to FIG. 4, the stator vane structure 150 is disposed radially inboard of the inner nacelle structure 84. A sidewall 166 of the inner nacelle structure 84, for example, is spaced radially outboard of the stator vane structure 150 and its vane structure outer platform 154. This nacelle sidewall 166 extends axially along the propulsion system axis 38 to the exhaust nozzle 86. The nacelle sidewall 166 extends circumferentially about (e.g., partially or completely around) the propulsion system axis 38. The nacelle sidewall 166 of FIG. 4 thereby axially overlaps and extends at least partially circumferentially around the stator vane structure 150 and its vane structure outer platform 154.

The air system 36 is configured to provide pressurized air for air cooling the electric machine 108. The air system 36 of FIG. 3, for example, is configured to direct the pressurized air bled from the core flowpath 52 into the tail cone structure 88 for air cooling the electric machine 108. The air system 36 includes an air circuit 168 and a control valve 170.

The air circuit 168 is configured as a single or multi-path air passage fluidly coupling the core flowpath 52 to the tail cone volume 142, for example through an internal volume 172 (e.g., an inner bore) of the stator vane structure 150 (see also FIG. 4). The air circuit 168, for example, extends longitudinally from an airflow inlet 174 into the air circuit 168, through the control valve 170, to one or more airflow outlets 178A and 178B (generally referred to as "178") from the air circuit 168 (see FIG. 4). More particularly, the air circuit 168 of FIG. 3 extends longitudinally from the circuit inlet 174, axially along the engine core 50 and its engine sections 45B, 46, 47A and 47B and then radially inward across the stator vane structure 150 of FIG. 4 and the core flowpath 52 through one or more of the stator vanes 156, to the circuit outlets 178.

Referring to FIG. 3, the circuit inlet 174 is disposed along the core flowpath 52 upstream of the combustor section 46 and its combustor 100. More particularly, the circuit inlet 174 is disposed along the core flowpath 52 in the compressor section 45. The circuit inlet 174 of FIG. 3, for example, is disposed along the core flowpath 52 in the LPC section 45A. This circuit inlet 174 may be disposed along a downstream half (1/2), third (1/3) or quarter (1/4) of the LPC rotor 65. The circuit inlet 174 of FIG. 3, for example, is disposed at (or about) a downstream end 180 of the LPC rotor 65. The circuit inlet 174 may be configured as or otherwise include a bleed port (or multiple bleed ports) and/or a scoop (or multiple scoops) in and/or along a radial outer peripheral boundary of the core flowpath 52 longitudinally overlapping the LPC rotor 65. The present disclosure, however, is not limited to such an exemplary arrangement. For example, the circuit inlet 174 may be disposed longitudinally along the core flowpath 52 between (a) the LPC section 45A and/or its LPC rotor 65 and (b) the HPC section 45B and/or its HPC rotor 66.

Referring to FIG. 4, the circuit outlets 178 from the air circuit 168 may be formed by and pierce one or more nozzles 182 for that air circuit 168. Each nozzle 182 may be located in the vane structure volume 172 and may be axially aligned with the array of the stator vane 156. Each nozzle 182 may be configured to direct one or more jets of the pressurized air out of the air circuit 168, through its circuit outlets 178, into the tail cone volume 142. Moreover, the circuit outlets 178 may be arranged in a showerhead pattern to direct the pressurized air jets to various locations in the tail cone volume 142. For example, one of the circuit outlets (e.g., 178A) may be configured to direct its pressurized air jet towards (e.g., to impinge against) the electric machine 108. Another one of the circuit outlets (e.g., 178B) may be configured to direct its pressurized air jet along a side of the electric machine 108. The present disclosure, however, is not limited to such an exemplary nozzle configuration. For example, one, some or all of the nozzles 182 may alternatively be disposed in the tail cone volume 142. In another example, one, some or all of the nozzles 182 may also or alternatively be replaced by fluid couplings into an interior of the electric machine 108. In still another example, some or all of the nozzles 182 may be combined into or replaced by a single nozzle.

Referring to FIG. 3, the control valve 170 is configured to regulate air bled from the core flowpath 52 and directed to the circuit outlets 178 for injection into the tail cone volume 142. For example, the control valve 170 may fully open such that air bled from the core flowpath 52 through the circuit inlet 174 may flow substantially unrestricted through the air circuit 168 to the circuit outlets 178 (see FIG. 4). In another example, the control valve 170 may fully close such that no air (or only a minimum level of air bled from the core flowpath 52 through the circuit inlet 174) flows through the air circuit 168 to the circuit outlets 178 (see FIG. 4). In still another example, the control valve 170 may be partially opened (or partially closed) such that a metered flow of air bled from the core flowpath 52 through the circuit inlet 174 flows through the air circuit 168 to the circuit outlets 178 (see FIG. 4).

During operation of the air system 36 of FIG. 3, the air system 36 bleeds core air from the core flowpath 52 and directs that pressurized air into the air circuit 168. The air circuit 168 directs the pressurized air (a) axially along and outboard of the engine core 50 and the inner case 82 and then (b) radially inward across the stator vane structure 150 and the core flowpath 52, through the respective stator vane(s) 156, to the nozzle(s) 182. Each nozzle 182 directs the pressurized air out of the air circuit 168 and into the tail cone volume 142 for impingement cooling, convectively cooling and/or otherwise air cooling the electric machine 108. The pressurized air may provide an insulative buffer between the relatively hot tail cone sidewall 144 and the electric machine 108. The pressurized air may also cool the tail cone sidewall 144 which is exposed to the relative hot combustion products flowing to and being exhausted out from the core exhaust 58.

In some embodiments, the air system 36 and its air circuit 168 may be dedicated to directing (e.g., only direct) the pressurized air bled from the core flowpath 52 (e.g., in the LPC section 45A) through the circuit inlet 174 into the tail cone volume 142 for cooling the electric machine 108, venting the tail cone volume 142, etc. In other embodiments, the air system 36 and its air circuit 168 may also be configured to direct pressurized air from another air source 184 into the tail cone volume 142 for cooling the electric machine 108, venting the tail cone volume 142, etc. The air circuit 168, for example, may include an upstream first supply leg 186, an upstream second supply leg 188, one or more downstream distribution legs 190 (see also FIG. 5) and a flow regulator 192. The first supply leg 186 extends longitudinally from the circuit inlet 174, through the control valve 170, to the flow regulator 192. The second supply leg 188 extends longitudinally from an outlet 194 of the air source 184, through an optional second control valve 196, to the flow regulator 192. Each distribution leg 190 extends longitudinally from the flow regulator 192, through the stator vane structure 150 and across the core flowpath 52, to the circuit outlets 178 (see FIG. 4). With this arrangement, each distribution leg 190 is fluidly coupled in parallel with and downstream of the supply legs 186 and 188 through the flow regulator 192.

The distribution legs 190 in FIG. 5 are associated with (e.g., extend through) a subset of the stator vanes 156. The present disclosure, however, is not limited to such an exemplary arrangement. For example, the subset of the stator vanes 156 arranged with the air circuit 168 and its distribution legs 190 may be more or less than that shown in FIG. 5. Moreover, it is contemplated each of the stator vanes 156 may be associated with the air circuit 168 and its distribution legs 190 or only a single one of the stator vanes 156 may be associated with the air circuit 168.

The flow regulator 192 of FIG. 3 is configured to selectively fluidly couple the first supply leg 186 and/or the second supply leg 188 to the distribution leg 190. The flow regulator 192, for example, may be configured as or otherwise include a flow diverter, a switching valve or a switching valve system. During a first mode of operation (e.g., during aircraft ground idle operation), the flow regulator 192 may fluidly couple the first supply leg 186 to the distribution leg 190. Here, the flow regulator 192 may also fluidly decouple the second supply leg 188 from the distribution leg 190. By contrast, during a second mode of operation (e.g., during aircraft cruise), the flow regulator 192 may fluidly couple the second supply leg 188 to the distribution leg 190. Here, the flow regulator 192 may also fluidly decouple the first supply leg 186 from the distribution leg 190. Of course, it is also contemplated the flow regulator 192 may operate in a third mode of operation where the flow regulator 192 fluidly couples both the first supply leg 186 and the second supply leg 188 to the distribution leg 190 according to a controlled split ratio (e.g., 25:75, 50:50 or 75:25) between the first supply leg 186 and the second supply leg 188.

The air source 184 may be any source of pressurized air (e.g., compressed air, forced induction air, etc.) available for use by the air system 36. The air source 184, for example, may be the bypass flowpath 54 or another flowpath (if included) in the aircraft propulsion system 22. In another example, the air source 184 may be the core flowpath 52 along another (e.g., upstream or downstream) section of the turbine engine 24 and its engine core 50. Moreover, while the air sources described above are disposed within the aircraft propulsion system 22, it is contemplated the air source 184 may alternatively be external to the aircraft propulsion system 22. For example, the air source 184 may be the external environment 94 (see FIG. 1) where an airflow inlet (e.g., 194) into the second supply leg 188 may be disposed along an exterior surface of the outer housing structure 30 of FIG. 1, along an exterior surface of a pylon structure mounting the aircraft propulsion system 22 to a component of an aircraft airframe; e.g., an aircraft wing, an aircraft fuselage, etc.

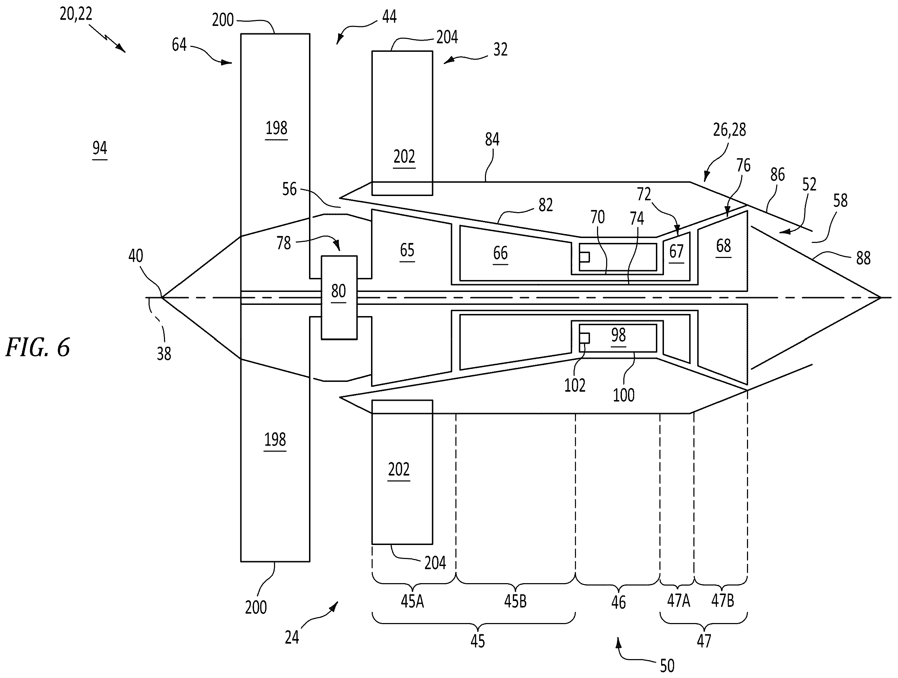

The aircraft propulsion system 22 of FIG. 1 is described above as a ducted propulsor propulsion system; e.g., the turbofan propulsion system. The present disclosure, however, is not limited to such an exemplary aircraft propulsion system. For example, referring to FIG. 6, the outer housing structure 30 (see FIG. 1) may be omitted from the propulsion system housing 26 to open the propulsor rotor 64 up to the external environment 94. More particularly, the propulsor rotor 64 of FIG. 6 includes a plurality of open propulsor blades 198 arranged circumferentially about the propulsion system axis 38 in an array; e.g., a circular array. This array of the propulsor blades 198 may be unshrouded or alternatively shrouded by a tubular propulsor rotor shroud dedicated to the propulsor rotor 64 for example. Each of these propulsor blades 198 projects spanwise (e.g., radially) out from a base of the propulsor rotor 64, into the external environment 94, to a distal tip 200 of the respective propulsor blade 198. Each propulsor blade 198 is thereby configured as an un-ducted propulsor blade which is exposed to (e.g., disposed in) the surrounding external environment 94. With this arrangement, the propulsor rotor 64 is an open propulsor rotor (e.g., an un-ducted propulsor rotor) and the aircraft propulsion system 22 is configured as an open rotor propulsion system. Moreover, the inner housing structure 28 and its nacelle structure may form an exterior of the aircraft propulsion system 22 and may border the external environment 94.

The guide vane structure 32 may also be open to the external environment 94 forming an open guide vane structure. This guide vane structure 32 of FIG. 6 includes a plurality of open exit guide vanes 202; e.g., airfoils. The guide vanes 202 are arranged and may (or may not) be equispaced circumferentially about the propulsion system axis 38 in an array; e.g., a circular array. This array of the guide vanes 202 may be unshrouded or alternatively shrouded by a tubular guide vane shroud dedicated to the guide vane structure 32 for example. This guide vane structure 32 and its guide vanes 202 are arranged axially next to (e.g., adjacent) the propulsor rotor 64 and its propulsor blades 198. The guide vane structure 32 and its guide vanes 202 of FIG. 6, for example, are arranged downstream of the propulsor rotor 64 and its propulsor blades 198, without (e.g., any) other elements axially therebetween to obstruct, turn and/or otherwise influence the air propelled by the propulsor rotor 64 to the guide vane structure 32. Each of the guide vanes 202 projects radially out from an exterior surface of the inner housing structure 28, into the external environment 94, to a distal tip 204 of the respective guide vane 202. Each guide vane 202 is thereby configured as an un-ducted guide vane which is exposed to (e.g., disposed in) the surrounding external environment 94. With the foregoing arrangement, the guide vane structure 32 and its guide vanes 202 are configured to condition (e.g., straighten out, de-swirl, etc.) an outer stream of air propelled by the propulsor rotor 64 within the external environment 94 that bypass the engine core 50. Of course, in other embodiments, the guide vane structure 32 may be omitted where, for example, the aircraft propulsion system 22 is alternatively configured as a counter-rotating open rotor (CROR) aircraft propulsion system, etc.

While the turbine engine 24 in FIG. 1 and FIG. 6 is shown with a particular two rotating structure arrangement, the present disclosure is not limited thereto. For example, the LPC rotor 65 may be omitted to configure the LPT rotor 68 as a power turbine (PT) rotor for the propulsor rotor 64. In another example, the turbine engine 24 may also include another rotating structure; e.g., an intermediate speed spool for the turbine engine 24 and its engine core 50.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft propulsion system (22), comprising:
a compressor section (45; 45A; 45B);
a combustor section (46);
a turbine section (47);
a flowpath (52) comprising a flowpath inlet (56) and a flowpath exhaust (58), the flowpath (52) extending through the compressor section (45; 45A; 45B), the combustor section (46) and the turbine section (47) from the flowpath inlet (56) to the flowpath exhaust (58);
a tail cone structure (88) forming an inner peripheral boundary of the flowpath (52) at the flowpath exhaust (58), the tail cone structure (88) comprising an internal volume (142);
an electric machine (108) disposed within the internal volume (142); and
an air system (36) configured to direct air, bled from the flowpath (52) upstream of the compressor section (45; 45A; 45B), into the tail cone structure (88) to cool the electric machine (108).

2. The assembly of claim 1, wherein the electric machine (108) is configurable as an electric motor during a motor mode of operation.

3. The assembly of claim 1 or 2, wherein the electric machine (108) is configurable as an electric generator during a generator mode of operation.

4. The assembly of any preceding claim, wherein:
the compressor section (45B) is a high pressure compressor section (45B);
the assembly further comprises a low pressure compressor section (45A) fluidly coupled inline along the flowpath (52) between the flowpath inlet (56) and the high pressure compressor section (45B); and
the air system (36) is configured to bleed the air from the flowpath (52) along the low pressure compressor section (45A).

5. The assembly of any of claims 1 to 3, wherein:
the compressor section (45B) is a high pressure compressor section (45B);
the assembly further comprises a low pressure compressor section (45A) fluidly coupled inline along the flowpath (52) between the flowpath inlet (56) and the high pressure compressor section (45B); and
the air system (36) is configured to bleed the air from the flowpath (52) at a location between the low pressure compressor section (45A) and the high pressure compressor section (45B).

6. The assembly of any preceding claim, further comprising:
a rotating structure (72; 76) comprising a bladed rotor (65; 66; 67; 68) arranged along the flowpath, optionally wherein the bladed rotor (67; 68) is disposed in the turbine section (47);
the electric machine (108) comprising an electric machine rotor (112) operatively coupled to the rotating structure (72; 76).

7. The assembly of claim 6, wherein:
the compressor section (45B) is a or the high pressure compressor section (45B);
the assembly further comprises a or the low pressure compressor section (45A) fluidly coupled inline along the flowpath (52) between the flowpath inlet (56) and the high pressure compressor section (45B); and
the bladed rotor (65) is disposed in the low pressure compressor section (45A).

8. The assembly of any preceding claim, wherein:
the air system (36) is configured to direct the air into the internal volume (142) to impinge against the electric machine (108); and/or
the air system (36) is configured to direct the air into the internal volume (142) to flow around and convectively cool the electric machine (108).

9. The assembly of any preceding claim, further comprising:
a vane structure (150) including an inner platform (152), an outer platform (154) and a plurality of vanes (156);
the inner platform (152) forming an inner peripheral boundary of the flowpath (52) through the vane structure (150);
the outer platform (154) forming an outer peripheral boundary of the flowpath (52) through the vane structure (150);
the plurality of vanes (156) arranged circumferentially about an axis (38) in an array, each of the plurality of vanes (156) extending radially across the flowpath (52) from the inner platform (152) to the outer platform (154), and the plurality of vanes (156) comprising a first vane (156);
the air system (36) configured to direct the air radially inward across the flowpath (52) through the first vane (156).

10. The assembly of any preceding claim, wherein:
the air system (36) comprises a control valve (170) to regulate a flow of the air bled from the flowpath (52); and/or
the air system (36) comprises a control valve to regulate a flow of the air direct into the tail cone structure (88).

11. The assembly of any preceding claim, wherein the air system (36) is configured to direct:
the air, bled from the flowpath (52) upstream of the compressor section (45; 45A; 45B), into the tail cone structure (88) to cool the electric machine (108) during a first mode of operation; and
air received from an air source (184) into the tail cone structure (88) to cool the electric machine (108) during a second mode of operation, and the air source (184) is disposed radially outboard of the flowpath (52),
optionally wherein:
the air source (184) comprises a bypass flowpath (54) within the aircraft propulsion system (22); or
the air source (184) is external to the aircraft propulsion system (22).

12. The assembly of any preceding claim, further comprising:
a ducted propulsor rotor (64); and
a rotating structure (76) operatively coupled to and configured to drive rotation of the ducted propulsor rotor (64), the rotating structure (76) comprises a turbine rotor (68) disposed in the turbine section (47).

13. The assembly of any of claims 1 to 11, further comprising:
an open propulsor rotor (64); and
a rotating structure (76) operatively coupled to and configured to drive rotation of the open propulsor rotor (64), the rotating structure (64) comprises a turbine rotor (68) disposed in the turbine section (47).

14. An assembly for an aircraft propulsion system (22), comprising:
a compressor section (45; 45A; 45B);
a combustor section (46);
a turbine section (47);
a flowpath (52) comprising a flowpath inlet (56) and a flowpath exhaust (58), the flowpath (52) extending through the compressor section (45; 45A; 45B), the combustor section (46) and the turbine section (47) from the flowpath inlet (56) to the flowpath exhaust (58);
a tail cone structure (88) forming an inner peripheral boundary of the flowpath (52) at the flowpath exhaust (58), the tail cone structure (88) comprising an internal volume (142);
an electric machine (108) disposed within the internal volume (142); and
an air system (36) configured to direct air into the tail cone structure (88) to cool the electric machine (108), the air system (36) configured to bleed the air from the flowpath (52) along the compressor section (45; 45A; 45B) during a first mode of operation, and the air system (36) configured to receive the air from an air source (184) outboard of the flowpath (52) during a second mode of operation.

15. An assembly for an aircraft propulsion system (22), comprising:
an open propulsor rotor (64);
an engine core (50) configured to power rotation of the open propulsor rotor (64), the engine core (50) comprising a compressor section (45; 45A; 45B), a combustor section (46) and a turbine section (47);
a flowpath (52) extending through the compressor section (45; 45A; 45B), the combustor section (46) and the turbine section (47) from a flowpath inlet (56) to a flowpath exhaust (58);
a tail cone structure (88) forming an inner peripheral boundary of the flowpath (52) at the flowpath exhaust (58), the tail cone structure (88) comprising an internal volume (142);
an electric machine (108) disposed within the internal volume (142); and
an air system (36) configured to direct air, bled from the flowpath (52) upstream of a combustor (100) in the combustor section (46), into the tail cone structure (88) to cool the electric machine (108).
